# EUROPÄISCHE PATENTSCHRIFT

(11) **EP 1 380 477 B1**
(45) Veröffentlichungstag und Bekanntmachung des Hinweises auf die Patenterteilung: **29.08.2007**
(21) Anmeldenummer: 03014551.0
(22) Anmeldetag: 07.07.2003
(51) Int. Cl.: B60R 21/20

(54) **Airbagabdeckung und Verfahren zur Herstellung einer Airbagabdeckung**
Cover for an airbag and method of manufacture for a cover for an airbag
Couvercle pour sac gonflable et procédé de fabrication

(30) Priorität: 10.07.2002 DE 10231131
(43) Veröffentlichungstag der Anmeldung: 14.01.2004
(73) Patentinhaber: Lisa Dräxlmaier GmbH, 84137 Vilsbiburg (DE)
(72) Erfinder: Müller, Henry, Dr., 84030 Landshut (DE); Schlemmer, Christian, 84034 Landshut-Münchnerau (DE); Aichner, Rudolf, 84178 Kirchberg (DE)
(74) Vertreter: HOFFMANN EITLE

(56) Entgegenhaltungen:
- FR-A- 2 761 940
- US-A- 5 316 822
- US-A- 5 744 776
- US-A- 5 803 489
- US-A1- 2002 130 497
- PATENT ABSTRACTS OF JAPAN vol. 013, no. 500 (M-891), 10. November 1989 (1989-11-10) & JP 01 202550 A (TAKATA KK), 15. August 1989 (1989-08-15)

## Beschreibung

### Technisches Gebiet

Die Erfindung betrifft eine Airbagabdeckung und ein Verfahren zur Herstellung einer Airbagabdeckung. Die Airbagabdeckung dient als Abdeckung des zusammengefalteten Airbags, der beispielsweise in ein Armaturenbrett oder ein Lenkrad eines Fahrzeugs integriert ist.

### Stand der Technik

Aus der Druckschrift EP 0 639 481 A1 ist eine Airbagabdeckung und ein Verfahren zur Herstellung einer Airbagabdeckung bekannt, wobei das Leder als oberste Schicht der Airbagabdeckung im Bereich der Reißnaht durch einen Streifen gezielt geschwächt ist, so dass die Airbagabdeckung in diesem gezielt geschwächten Bereich des Leders aufreißt, wenn sich der Airbag im Bedarfsfall aufbläst, um den Insassen des Fahrzeugs zu schützen.

Bei der Vorrichtung und dem Verfahren gemäß der EP 0 639 481 A1 kommt es jedoch dazu, dass der gezielt geschwächte Bereich spätestens unter Wärme und Feuchtigkeitseinfluss sowie zumindest unter Langzeiteinwirkung sichtbar wird, d.h., dass die Naht der Airbagabdeckung im Armaturenbrett oder Lenkrad nach und nach durch die Einwirkung von Sonne und Temperaturschwankungen vermehrt sichtbar wird.

Eine Airbagabdeckung mit den Merkmalen des Oberbegriffs von Patentanspruch 1 ist zum Beispiel aus der US-A-5,316,822 oder der US-A-5,744,776 bekannt.

### Darstellung der Erfindung

Daher liegt der Erfindung das technische Problem zu Grunde, eine Vorrichtung sowie ein Verfahren bereitzustellen, wobei keine sichtbare Naht der Airbagabdeckung entsteht, die auch bei Temperatur- und Feuchtigkeitseinfluss sowie Langzeitalterung unsichtbar bleibt, und wobei die Airbagfunktionalität, d.h. das Aufreißen der Airbagabdeckung beim Auslösen bzw. Aufblasen des Airbags, beibehalten wird.

Dieses technische Problem wird durch einen Airbag mit den Merkmalen des Anspruchs 1 bzw. durch ein Verfahren mit den Merkmalen des Anspruchs 15 gelöst.

Der Erfindung liegt der Gedanke zu Grunde, dass auf Grund der eingeschränkten Dehnfähigkeit der beiden miteinander verbundenen Schichten, nämlich der ersten Schicht und der an deren Rückseite angebrachten zweiten Schicht, die Airbagabdeckung in dem Bereich aufreißt, in welchem der Schwächungsbereich der zweiten Schicht vorliegt, wenn der Airbag im Bedarfsfall ausgelöst wird. Durch die beim Aufblasen des Airbags auftretenden Kräfte entsteht in der ersten Schicht an dieser Stelle somit eine große Kerbwirkung, an welcher der Schwächungsbereich der zweiten Schicht angrenzt, so dass dadurch der Verlauf der Reißnaht der Airbagabdeckung gezielt vorgegeben wird.

Gemäß der Erfindung ist die gewünschte Reißnaht der Airbagabdeckung über einen langen Zeitraum selbst unter Sonneneinwirkung und Temperaturschwankungen nicht sichtbar. Dabei kann die Schwächung der zweiten Schicht unterschiedliche Ausführungsformen aufweisen, wobei jedoch die erste Schicht unverändert ist, insbesondere eine gleichbleibende Schichtdicke aufweist. Gemäß der vorliegenden Erfindung weist die erste Schicht entlang dem Bereich des Verlaufs der Reißnaht eine Schwächung auf, so dass der Verlauf der Reißnaht durch die Schwächung der ersten Schicht unterstützt wird, wobei bevorzugterweise die Schwächung der ersten Schicht durch ein Aufschneiden bzw. Anritzen oder Stanzen erfolgt.

Der Verlauf des Schwächungsbereichs der zweiten Schicht stimmt nicht oder nur teilweise mit dem Verlauf der Schwächung der ersten Schicht überein. Somit erhält man eine Airbagabdeckung mit einer nicht sichtbaren gewünschten Reißnaht, welche auch dann nicht sichtbar wird, wenn die Airbagabdeckung unterschiedlichen Krafteinwirkungen ausgesetzt ist, die zu Verspannungen bzw. Verwerfungen der Airbagabdeckung führen könnten.

Somit sind bei der erfindungsgemäßen Airbagabdeckung bzw. bei dem erfindungsgemäßen Verfahren zur Herstellung einer Airbagabdeckung keine Ziernähte und Funktionsnähte erforderlich, welche von außen sichtbar sind und die Gestaltung eines Fahrzeuginnenraums negativ beeinflussen. Folglich wird gemäß der Erfindung eine Airbagabdeckung bzw. ein Verfahren zur Herstellung der Airbagabdeckung bereitgestellt, wobei keine von außen sichtbare Naht der Airbagabdeckung vorliegt, ohne dabei die Funktionalität des Airbags negativ zu beeinflussen.

Vorteilhafte Ausgestaltungen sind Gegenstand der Unteransprüche. So ist es vorteilhaft, wenn die zweite Schicht aus einem Gewebe, einer Folie oder einem Vlies gebildet wird, welches im Wesentlichen über der gesamten Fläche an der ersten Schicht angebracht ist. Dadurch ergibt sich eine einfach gestaltete Verstärkung der ersten Schicht, wobei eine gezielte Schwächung von lediglich der zweiten Schicht bewerkstelligt wird.

Wenn die zweite Schicht durch ein Klebverfahren an der ersten Schicht aufgebracht ist oder auf die erste Schicht aufkaschiert ist, erzielt man eine kostengünstige Anbringung der zweiten Schicht an der Rückseite der ersten Schicht.

Vorteilhafterweise ist das Gewebe oder das Vlies aus thermoplastischen oder duromeren Kunststoffen oder aus Metallen, Keramiken, Glas oder Naturstoffen aufgebaut. Ferner ist die erste Schicht vorteilhafterweise aus Leder aufgebaut, so dass sich ein besonders ästhetischer Innenraum eines Fahrzeugs ohne sichtbare Naht der Airbagabdeckung ergibt.

Des Weiteren ist es von Vorteil, wenn die erste Schicht aus Planware, künstlichem Leder, Textilien, thermoplastischen oder duromeren Kunststoffen aufgebaut ist, so dass man eine kostengünstige Airbagabdeckung mit unsichtbarer Naht im Bereich der Reißlinie erhält.

Wenn der Schwächungsbereich durch zumindest eine Aussparung in der zweiten Schicht gebildet ist, ist somit die erfindungsgemäße Airbagabdeckung konstruktiv einfach und kostengünstig herstellbar.

Gemäß einer bevorzugten Ausführungsform weist der Schwächungsbereich ein elektrisch leitendes Element auf, durch welches im Bedarfsfall unmittelbar vor der Entfaltung des Airbags ein elektrischer Strom zur Schwächung der zweiten Schicht geleitet wird. Als Folge davon erhält man eine Airbagabdeckung, die keine permanente mechanische Schwächung aufweist und wobei der Schwächungsbereich seine Wirkung durch eine Kopplung mit der Airbagauslösung lediglich im Bedarfsfall erhält.

Zur Verbesserung der Haptik ist vorteilhafterweise eine dritte Schicht an der zweiten Schicht angebracht, welche aus einem Abstandsgewirke, Schaumstoff oder einer Kombination von Abstandsgewirke/Schaumstoff aufgebaut ist.

Ferner ist es von Vorteil, wenn die dritte Schicht einen Hilfsschwächungsbereich aufweist, um die Kerbwirkung und somit die Funktionalität des Airbags bzw. der Airbagabdeckung im Bedarfsfall zu erhöhen.

Gemäß einer bevorzugten Ausführungsform ist an der zweiten Schicht oder an der dritten Schicht ein Verstärkungsband vorgesehen, welches dem zusammengefalteten Airbag zugewandt ist. Somit kann ein Knicken des Verbundes bzw. der ersten Schicht und somit eine von außen sichtbare Markierung vermieden werden.

Gemäß einer Ausführungsform der vorliegenden Erfindung verläuft der Schwächungsbereich der zweiten Schicht und die Schwächung der ersten Schicht wellen- oder zickzackförmig.

Ferner ist eine bevorzugte Ausführungsform der vorliegenden Erfindung effektiv herstellbar, bei der der Schwächungsbereich der zweiten Schicht linear verläuft und die Schwächung der ersten Schicht wellen- oder zickzackförmig verläuft. Analog dazu ist es vorteilhaft, wenn der Schwächungsbereich der zweiten Schicht wellen- oder zickzackförmig verläuft und die Schwächung der ersten Schicht linear verläuft.

Gemäß einem vorteilhaften Verfahren der vorliegenden Erfindung wird eine dritte Schicht an der zweiten Schicht angebracht, um die Verstärkung der ersten Schicht zu erhöhen und die Haptik der Abdeckung zu verbessern.

Wenn die dritte Schicht vor dem Aufbringen auf die zweite Schicht oder nach dem Aufbringen auf die zweite Schicht mit einem Hilfsschwächungsbereich versehen wird, wird die Kerbwirkung auf die gewünschte Reißnaht in der ersten Schicht erhöht.

Ferner ist es von Vorteil, wenn die erste Schicht vor dem Aufbringen auf die zweite Schicht mit einer Schwächung versehen wird, um die gewünschte Reißlinie zu unterstützen.

Gemäß einem bevorzugten Verfahren der vorliegenden Erfindung wird die Schwächung der ersten Schicht derart vorgenommen, dass die Schwächung der ersten Schicht nicht oder nur teilweise mit dem Schwächungsbereich der zweiten Schicht übereinstimmt. Als Folge davon erhält man eine Airbagabdeckung mit einer nicht sichtbaren gewünschten Reißlinie, die auch bei Verspannungen der Airbagabdeckung unsichtbar ist.

Wenn die erste Schicht zur Ausbildung der Schwächung durch Stanzen bearbeitet wird und die zweite Schicht zur Ausbildung des Schwächungsbereichs durch Stanzen bearbeitet wird, können diese Arbeitsschritte durch eine einzige Bearbeitungsvorrichtung hintereinander oder gleichzeitig ausgeführt werden.

Gemäß einem bevorzugten Verfahren der vorliegenden Erfindung wird der Schwächungsbereich der zweiten Schicht durch ein elektrisch leitendes Element erzeugt, durch welches im Bedarfsfall unmittelbar vor der Entfaltung des Airbags ein elektrischer Strom zur Schwächung der zweiten Schicht geleitet wird. Somit kommt es lediglich unmittelbar vor dem Aufreißen der Reißnaht zu einer mechanischen Schwächung der Airbagabdeckung, so dass man eine mechanisch stabile Airbagabdeckung mit unsichtbarer gewünschter Reißnaht erhält.

### Kurze Beschreibung der Zeichnungen:

Nachfolgend wird die Erfindung rein beispielhaft an Hand der beigefügten Figuren beschrieben. Es zeigt:
- Fig. 1:: eine Querschnittsansicht einer nicht erfindungsgemäßen Airbagabdeckung ohne Schwächungsbereich;
- Fig. 2:: eine Querschnittsansicht einer nicht erfindungsgemäßen Airbagabdeckung mit Schwächungsbereich nur in der zweiten Schicht;
- Fig. 3:: eine Draufsicht auf die Airbagabdeckung von Fig. 2 von unten gesehen;
- Fig. 4:: eine Querschnittsansicht einer weiteren nicht erfindungsgemäßen Airbagabdeckung ohne Schwächungsbereich; und
- Fig. 5:: eine Querschnittsansicht der Airbagabdeckung von Fig. 4 mit Schwächungsbereich nur in der zweiten oder dritten Schicht.

### Beschreibung von verschiedenen Beispielen

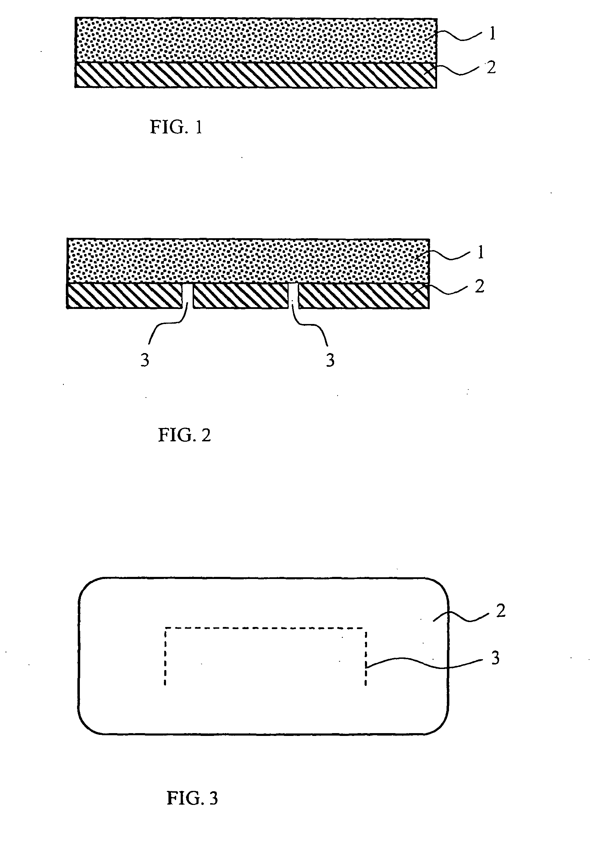

Fig. 1 zeigt eine erste Airbagabdeckung, wobei an der Rückseite einer ersten Schicht 1 eine zweite Schicht 2 aufgebracht ist. Bevorzugterweise besteht die erste Schicht 1 aus Leder, welches im Wesentlichen unversehrt ist und eine unveränderte Schichtdicke aufweist. An der ersten Lederschicht 1 wird die zweite Schicht 2 in Form eines Gewebes bzw. Vlieses 2 durch einen Klebvorgang oder durch Aufkaschieren aufgebracht. Bei dem Aufkaschieren bzw. Kleben kann jeglicher gängiger Klebstoff verwendet werden, wobei beispielsweise ein Hotmelt-Verfahren verwendet wird oder PU-Kleber bzw. ein Dispersionskleber verwendet wird. Somit entsteht ein Verbund aus Leder und einem Gewebe, welches eine eingeschränkte Dehnfähigkeit gegenüber lediglich der ersten Schicht bzw. dem Leder aufweist. Nachdem der Verbund aus der Lederschicht 1 und der Gewebeschicht 2 fertiggestellt worden ist, wie in Fig. 1 ersichtlich, wird die zweite Schicht 2 bzw. die Gewebeschicht 2 mit einem Schwächungsbereich 3 versehen, wie in Fig. 2 dargestellt. Der Schwächungsbereich 3 der zweiten Schicht 2 kann jedoch auch vor oder während dem Aufbringen der zweiten Schicht 2 auf die erste Schicht 1 vorgenommen werden.

In Fig. 2 ist der Schwächungsbereich 3 in Form von Aussparungen 3 in der zweiten Schicht 2 ausgebildet, welche bis an die erste Schicht 1 heranreichen.

Im Folgenden wird nun die Funktion der Airbagabdeckung gemäß den Fig. 1 und 2 erläutert. Im Einbauzustand der Airbagabdeckung befindet sich angrenzend an die zweite Schicht 2 ein zusammengefalteter Airbag, der in den Figuren nicht dargestellt ist. Wenn dieser Airbag bei einem Unfall ausgelöst wird und sich dieser aufbläst, wird ein starker Druck auf die Airbagabdeckung aufgebracht. Auf Grund des Schwächungsbereichs 3, welcher sich angrenzend an die erste Lederschicht 1 befindet, ist an dieser Stelle die Dehnfähigkeit der Airbagabdeckung höher bzw. die Festigkeit geringer. Als Folge davon wird der Verlauf der Reißnaht beim Entfalten des Airbags durch den Schwächungsbereich 3 vorgegeben, so dass der Airbag entlang der durch den Schwächungsbereich 3 vorgegebenen Reißlinie die Airbagabdeckung durchbricht und sich in das Innere eines Fahrzeugs ausbreitet.

In Fig. 3 ist die Airbagabdeckung der Fig. 1 und 2 von unten dargestellt, wobei der Schwächungsbereich 3 einen U-förmigen Verlauf aufweist, so dass ein Teil der Airbagabdeckung entlang der durch den Schwächungsbereich 3 U-förmig ausgebildeten Reißnaht nach oben klappt, um das Entfalten des Airbags in den Innenraum eines Fahrzeugs zu ermöglichen. Auf Grund der vorstehend beschriebenen Kerbwirkung des Schwächungsbereichs 3 reißt die Airbagabdeckung gezielt entlang dem Verlauf dieses Schwächungsbereichs 3. Der als Aussparung 3 ausgebildete Schwächungsbereich 3 kann dabei mittels eines Lasers, eines Messers, eines Stempels oder eines Stanzwerkzeugs in der zweiten Schicht ausgebildet werden, wobei die erste Schicht nicht beeinflusst bzw. bearbeitet wird. Dadurch, dass lediglich die zweite Schicht 2 einen Schwächungsbereich 3 aufweist und die erste Schicht 1 unversehrt ist, erhält man eine Airbagabdeckung, die einen vorgegebenen Verlauf der Reißnaht aufweist, welche jedoch selbst bei Temperatur- und Feuchtigkeitseinfluss sowie Langzeitalterung nicht sichtbar ist, ohne dabei die Funktionalität des Airbags einzuschränken.

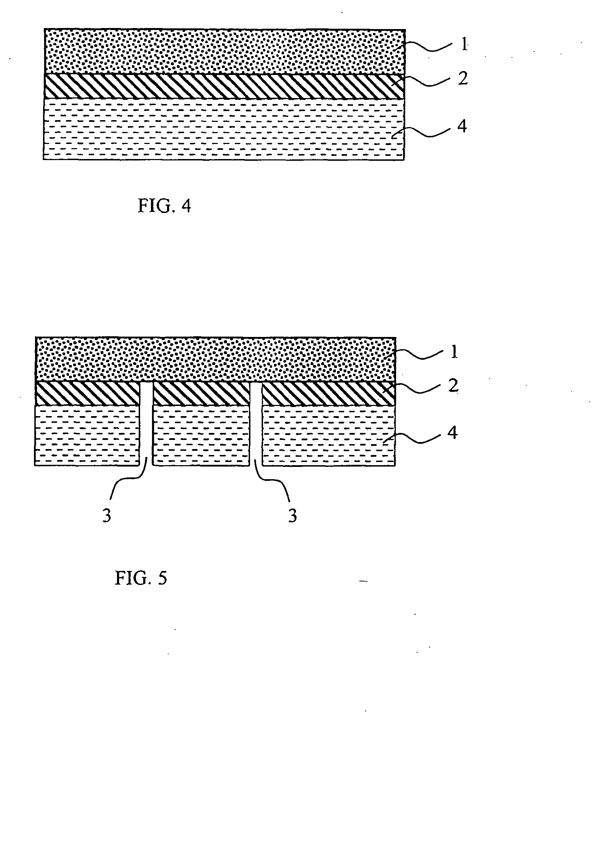

Die Fig. 4 und 5 zeigen nun eine weitere Airbagabdeckung. Wie aus Fig. 4 ersichtlich befindet sich im Unterschied zu der ersten Airbagabdeckung aus Fig. 1 gemäß der zweiten Airbagabdeckung ein Abstandsgewirke 4 an der Rückseite der zweiten Schicht 2. Das Abstandsgewirke 4 kann bevorzugterweise aus Schaumstoff aufgebaut sein, um die Haptik der Airbagabdeckung zu verbessern. Ferner wird durch das Abstandsgewirke 4 ebenso die Festigkeit der Airbagabdeckung erhöht. Dabei kann das Abstandsgewirke 4 vor oder nach dem Aufbringen der zweiten Schicht 2 auf die erste Schicht 1 an der Rückseite der zweiten Schicht 2 in geeigneter Weise aufgebracht werden, beispielsweise durch ein Klebeverfahren oder durch Aufkaschieren, wie in Fig. 4 gezeigt.

In Fig. 5 ist die Airbagabdeckung nun mit einem Schwächungsbereich 3 versehen, welcher vor oder nach dem Aufbringen der zweiten Schicht 2 an der ersten Schicht 1 durch die zweite Schicht 2 und durch das Abstandsgewirke 4 hindurch verläuft. Wie in Fig. 5 dargestellt, ist der Schwächungsbereich 3 in Form von Aussparungen 3 ausgebildet, welche eine Kerbwirkung beim Aufblasen des zusammengefalteten Airbags bewirken. Auf Grund der unveränderten ersten Schicht 1 bleibt auch bei der zweiten Airbagabdeckung die gewünschte Reißnaht entlang dem Schwächungsbereich 3 von außen unsichtbar, selbst wenn Temperaturschwankungen und Sonnenstrahlung auf die Airbagabdeckung einwirken, ohne dass dabei die Funktionalität des Airbags, d.h. das Aufreißen der Airbagabdeckung beim Aufblasen des Airbags, negativ beeinflusst wird.

Der Schwächungsbereich kann auch durch ein elektrisch leitendes Element bzw. einen elektrisch leitenden Faden in der zweiten Schicht erzeugt werden, durch welches im Bedarfsfall unmittelbar vor der Entfaltung des Airbags ein elektrischer Strom zur Schwächung der zweiten Schicht geleitet wird. Dadurch entsteht an der Stelle des elektrisch leitenden Elements auf Grund der verminderten Festigkeit eine Kerbwirkung in der zweiten Schicht, so dass die Reißnaht der Airbagabdeckung entlang dem Verlauf des elektrisch leitenden Elements ausgebildet wird.

Die Airbagabdeckung kann an der Rückseite im Bereich des Schwächungsbereichs durch ein angebrachtes Band verstärkt werden, um ein Knicken des Verbundes der ersten und der zweiten Schicht zu vermeiden. Des Weiteren kann der Schwächungsbereich auch partiell oder vollständig an der Oberfläche geschlossen werden, beispielsweise durch Verschweißen, Verkleben oder Vernähen, um ein Knicken der Airbagabdeckung zu verhindern.

Die erste Lederschicht kann auch auf ein über einen Kern vorgeformtes Gewebe als zweite Schicht aufkaschiert werden.

Gemäß der Erfindung wird auch die erste Schicht gezielt entlang der geforderten Reißlinie beispielsweise durch Anritzen geschwächt. Daraufhin wird die zweite Schicht aufkaschiert und anschließend in einem weiteren Arbeitsgang wird die zweite Schicht geschwächt. Diese Schwächung der zweiten Schicht kann zur Schwächung der ersten Schicht in einem gewissen Abstand erfolgen, wobei die Schwächung der zweiten Schicht wellen- oder zickzackförmig verläuft und die Schwächung der ersten Schicht linear oder ebenso wellen- oder zickzackförmig verläuft. Die Schwächung kann beispielsweise durch ein Stanzen erfolgen, wobei die zweite Schicht gezielt geschwächt werden kann, bevor beide Schichten miteinander verbunden werden. Somit erhält man eine Airbagabdeckung, die einen gezielten Reißverlauf aufweist, welcher von außen auch bei Temperatur- und Feuchtigkeitseinfluss sowie Langzeitalterung nicht sichtbar ist.

Gemäß der Erfindung wird folglich eine Airbagabdeckung sowie ein Verfahren zur Herstellung einer Airbagabdeckung beschrieben, welche eine erste Schicht, die an den Raum angrenzt, in welchen sich der Airbag im Bedarfsfall entfaltet, und zumindest eine zweite Schicht 2 aufweist, die dem zusammengefalteten Airbag zugewandt ist, wobei die zweite Schicht 2 zur Verstärkung der ersten Schicht 1 an der Rückseite angebracht ist, und wobei die zweite Schicht 2 und die erste Schicht 1 einen Schwächungsbereich aufweisen, um den Verlauf der Reißnaht beim Entfalten des Airbags vorzugeben, wobei die beiden Schwächungsbereiche nicht oder nur teilweise miteinander übereinstimmen.

## Patentansprüche

1. Airbagabdeckung mit einer ersten Schicht (1), die an den Raum angrenzt, in welchen sich der Airbag im Bedarfsfall entfaltet, und die entlang dem Bereich des Verlaufs einer von außen nicht sichtbaren Reißnaht der Airbagabdeckung eine Schwächung aufweist,
und zumindest einer zweiten Schicht (2), die dem zusammengefalteten Airbag zugewandt ist,
wobei die zweite Schicht (2) zur Verstärkung der ersten Schicht (1) an deren Rückseite angebracht ist,
und wobei die zweite Schicht (2) auch entlang dem Bereich des Verlaufs der Reißnaht eine Schwächung (3) aufweist, **dadurch gekennzeichnet, dass** der Verlauf der Schwächung (3) der zweiten Schicht (2) nicht deckungsgleich mit der Schwächung der ersten Schicht (1) ist.

2. Airbagabdeckung nach Anspruch 1, **dadurch gekennzeichnet, dass** die zweite Schicht (2) aus einem Gewebe, einer Folie oder einem Vlies gebildet wird, welches im Wesentlichen über der gesamten Fläche an der ersten Schicht (1) angebracht ist.

3. Airbagabdeckung nach Anspruch 1 oder 2, **dadurch gekennzeichnet, dass** die zweite Schicht (2) durch ein Klebeverfahren an der ersten Schicht (1) aufgebracht ist oder auf die erste Schicht (1) aufkaschiert ist.

4. Airbagabdeckung nach Anspruch 2 oder 3, **dadurch gekennzeichnet, dass** das Gewebe oder das Vlies der zweiten Schicht (2) aus thermoplastischen oder duromeren Kunststoffen oder aus Metallen, Keramiken, Glas oder Naturstoffen aufgebaut ist.

5. Airbagabdeckung nach einem der Ansprüche 1 bis 4, **dadurch gekennzeichnet, dass** die erste Schicht (1) aus Leder aufgebaut ist.

6. Airbagabdeckung nach einem der Ansprüche 1 bis 4, **dadurch gekennzeichnet, dass** die erste Schicht (1) aus Planware, künstlichem Leder, Textilien, thermoplastischen oder duromeren Kunststoffen oder thermoplastischen/duromeren Kunststoffen aufgebaut ist.

7. Airbagabdeckung nach einem der Ansprüche 1 bis 6, **dadurch gekennzeichnet, dass** die Schwächung (3) durch zumindest eine Aussparung (3) in der zweiten (2) Schicht gebildet ist.

8. Airbagabdeckung nach einem der Ansprüche 1 bis 7, **dadurch gekennzeichnet, dass** die Schwächung (3) ein elektrisch leitendes Element aufweist, durch welches im Bedarfsfall unmittelbar vor der Entfaltung des Airbags ein elektrischer Strom zur Schwächung der zweiten Schicht geleitet wird.

9. Airbagabdeckung nach einem der Ansprüche 1 bis 8, **dadurch gekennzeichnet, dass** eine dritte Schicht (4) an der zweiten Schicht (2) angebracht ist, welche aus einem Abstandsgewirke, Schaumstoff oder einer Kombination von Abstandsgewirke/Schaumstoff aufgebaut ist.

10. Airbagabdeckung nach Anspruch 9, **dadurch gekennzeichnet, dass** die dritte Schicht (4) eine Hilfsschwächung (3) aufweist.

11. Airbagabdeckung nach einem Ansprüche 1 bis 10, **dadurch gekennzeichnet, dass** an der zweiten Schicht (2) oder an der dritten Schicht (4) ein Verstärkungsband vorgesehen ist, welches dem zusammengefalteten Airbag zugewandt ist.

12. Airbagabdeckung nach einem der vorstehenden Ansprüche, **dadurch gekennzeichnet, dass** die Schwächung (3) der zweiten Schicht (2) und die Schwächung der ersten Schicht (1) wellen- oder zickzackförmig verlaufen.

13. Airbagabdeckung nach einem der Ansprüche 1 bis 11, **dadurch gekennzeichnet, dass** die Schwächung der zweiten Schicht linear verläuft und die Schwächung der ersten Schicht wellen- oder zickzackförmig verläuft.

14. Airbagabdeckung nach einem der Ansprüche 1 bis 11, **dadurch gekennzeichnet, dass** die Schwächung (3) der zweiten Schicht (2) wellen- oder zickzackförmig verläuft und die Schwächung der ersten Schicht (1) linear verläuft.

15. Verfahren zur Herstellung einer Airbagabdeckung mit einer ersten Schicht (1), die an den Raum angrenzt, in welchen sich der Airbag im Bedarfsfall entfaltet, und die entlang dem Bereich des Verlaufs einer von außen nicht sichtbaren Reißnaht der Airbag abdeckung eine Schwächung aufweist,
wobei die erste Schicht (1) vor dem Aufbringen auf die zweite Schicht (2) mit der Schwächung versehen wird und im Wesentlichen über deren gesamte Fläche an deren Rückseite zur Verstärkung mit einer zweiten Schicht (2) verbunden wird, welche dem zusammengefalteten Airbag zugewandt ist,
und wobei auch die zweite Schicht (2) mit einer Schwächung (3) versehen wird, **dadurch gekennzeichnet, dass** die Schwächung der ersten Schicht (1) derart vorgenommen wird, dass die Schwächung der ersten Schicht (1) nicht deckungsgleich mit der Schwächung (3) der zweiten Schicht (2) ist.

16. Verfahren nach Anspruch 15, **dadurch gekennzeichnet, dass** eine dritte Schicht an der zweiten Schicht angebracht wird.

17. Verfahren nach Anspruch 16, **dadurch gekennzeichnet, dass** die dritte Schicht (4) vor dem Aufbringen auf die zweite Schicht oder nach dem Aufbringen auf die zweite Schicht (2) mit einer Hilfsschwächung (3) versehen wird.

18. Verfahren nach einem der Ansprüche 15 bis 17, **dadurch gekennzeichnet, dass** die erste Schicht (1) zur Ausbildung der Schwächung durch Stanzen bearbeitet wird und dass die zweite Schicht (2) zur Ausbildung der Schwächung (3) durch Stanzen bearbeitet wird.

19. Verfahren nach einem der Ansprüche 15 bis 18, **dadurch gekennzeichnet, dass** die Schwächung (3) der zweiten Schicht (2) durch ein elektrisch leitendes Element erzeugt wird, durch welches im Bedarfsfall unmittelbar vor der Entfaltung des Airbags ein elektrischer Strom zur Schwächung der zweiten Schicht geleitet wird.

## Claims

1. Airbag cover having a first layer (1), which borders on the space in which the airbag is deployed if necessary, and which has a weakening along the region of the path of a tear seam of the airbag cover which is not visible from the outside, and at least a second layer (2), which is facing the folded-up airbag, wherein the second layer (2) to reinforce the first layer (1) is attached to the rear side thereof, and wherein the second layer (2) also has a weakening (3) along the region of the path of the tear seam, **characterised in that** the path of the weakening (3) of the second layer (2) does not coincide with the weakening of the first layer (1).

2. Airbag cover according to claim 1, **characterised in that** the second layer (2) is formed from a fabric, a film or a nonwoven, which is attached to the first layer (1) essentially over the entire surface area.

3. Airbag cover according to claim 1 or 2, **characterised in that** the second layer (2) is applied to the first layer (1) by an adhesion process or is laminated onto the first layer (1).

4. Airbag cover according to claim 2 or 3, **characterised in that** the fabric or the nonwoven of the second layer (2) is composed of thermoplastic or thermosetting plastics or from metals, ceramics, glass or natural materials.

5. Airbag cover according to one of claims 1 to 4, **characterised in that** the first layer (1) is composed of leather.

6. Airbag cover according to one of claims 1 to 4, **characterised in that** the first layer (1) is composed of flat goods, artificial leather, textiles, thermoplastic or thermosetting plastics or thermoplastic/thermosetting plastics.

7. Airbag cover according to one of claims 1 to 6, **characterised in that** the weakening (3) is formed by at least one recess (3) in the second (2) layer.

8. Airbag cover according to one of claims 1 to 7, **characterised in that** the weakening (3) has an electrically conductive element, through which an electric current is passed to weaken the second layer if necessary immediately before deploying the airbag.

9. Airbag cover according to one of claims 1 to 8, **characterised in that** a third layer (4) is attached to the second layer (2), which is composed of a spacer knitted fabric, foam or a combination of spacer knitted fabric/foam.

10. Airbag cover according to claim 9, **characterised in that** the third layer (4) has an auxiliary weakening (3).

11. Airbag cover according to one of claims 1 to 10, **characterised in that** a reinforcing tape, which is facing the folded-up airbag, is provided on the second layer (2) or on the third layer (4).

12. Airbag cover according to one of the preceding claims, **characterised in that** the weakening (3) of the second layer (2) and the weakening of the first layer (1) run like a wave or like a zigzag.

13. Airbag cover according to one of claims 1 to 11, **characterised in that** the weakening of the second layer runs linearly and the weakening of the first layer runs like a wave or like a zigzag.

14. Airbag cover according to one of claims 1 to 11, **characterised in that** the weakening (3) of the second layer (2) runs like a wave or like a zigzag and the weakening of the first layer (1) runs linearly.

15. Process for producing an airbag cover having a first layer (1), which borders on the space in which the airbag is deployed if necessary, and which has a weakening along the region of the path of a tear seam of the airbag cover which is not visible from the outside, wherein the first layer (1) is provided with the weakening before application to the second layer (2) and is joined to a second layer (2), which is facing the folded-up airbag, essentially over its entire surface area on the rear side thereof for reinforcement, and wherein the second layer (2) is also provided with a weakening (3), **characterised in that** the weakening of the first layer (1) is carried out such that the weakening of the first layer (1) does not coincide with the weakening (3) of the second layer (2).

16. Process according to claim 15, **characterised in that** a third layer is attached to the second layer.

17. Process according to claim 16, **characterised in that** the third layer (4) is provided with an auxiliary weakening (3) before application to the second layer or after application to the second layer (2).

18. Process according to one of claims 15 to 17, **characterised in that** the first layer (1) is processed to form the weakening by stamping and **in that** the second layer (2) is processed to form the weakening (3) by stamping.

19. Process according to one of claims 15 to 18, **characterised in that** the weakening (3) of the second layer (2) is produced by an electrically conductive element, through which an electric current is passed to weaken the second layer if necessary immediately before deploying the airbag.

## Revendications

1. Couvercle d'airbag avec une première couche (1) de séparation avec l'espace dans lequel se déploie l'airbag en cas de besoin, qui présente un affaiblissement le long de la région du tracé d'une ligne de rupture du couvercle d'airbag non visible de l'extérieur,
et au moins une seconde couche (2) tournée vers l'airbag replié,
la seconde couche (2) étant disposée au dos de la première couche (1) pour la renforcer,
et la seconde couche (2) présentant également un affaiblissement (3) le long de la région du tracé de la ligne de rupture, **caractérisé en ce que** le tracé de l'affaiblissement (3) de la seconde couche (2) ne coïncide pas avec l'affaiblissement de la première couche (1).

2. Couvercle d'airbag selon la revendication 1, **caractérisé en ce que** la seconde couche (2) est formée par un tissu, une feuille ou un non tissé, appliqué sensiblement sur l'ensemble de la surface de la première couche (1).

3. Couvercle d'airbag selon la revendication 1 ou 2, **caractérisé en ce que** la seconde couche (2) est appliquée sur la première couche (1) par un procédé de collage, ou est contrecollée sur la première couche (1).

4. Couvercle d'airbag selon la revendication 2 ou 3, **caractérisé en ce que** le tissu ou le non tissé de la seconde couche (2) est constitué de matières synthétiques thermoplastiques ou thermodurcissables, ou également de métaux, céramiques, verre ou matières naturelles.

5. Couvercle d'airbag selon l'une des revendications 1 à 4, **caractérisé en ce que** la première couche (1) est en cuir.

6. Couvercle d'airbag selon l'une des revendications 1 à 4, **caractérisé en ce que** la première couche (1) est en toile, en cuir artificiel, en textiles, en matières synthétiques thermoplastiques ou thermodurcissables ou en matières synthétiques thermoplastiques/thermodurcissables.

7. Couvercle d'airbag selon l'une des revendications 1 à 6, **caractérisé en ce que** l'affaiblissement (3) est formé par au moins une encoche (3) dans la seconde couche (2) .

8. Couvercle d'airbag selon l'une des revendications 1 à 7, **caractérisé en ce que** l'affaiblissement (3) présente un élément conducteur de l'électricité dans lequel, en cas de besoin, un courant électrique est conduit juste avant le déploiement de l'airbag, pour affaiblir la seconde couche.

9. Couvercle d'airbag selon l'une des revendications 1 à 8, **caractérisé en ce qu'**une troisième couche (4) est associée à la seconde couche (2), et est constituée d'un tissu d'écartement, de mousse ou d'une combinaison tissu d'écartement/mousse.

10. Couvercle d'airbag selon la revendication 9, **caractérisé en ce que** la troisième couche (4) présente un affaiblissement auxiliaire (3).

11. Couvercle d'airbag selon l'une des revendications 1 à 10, **caractérisé en ce qu'**une bande de renforcement est prévue sur la seconde couche (2) ou la troisième couche (4), et est tournée vers l'airbag replié.

12. Couvercle d'airbag selon l'une des revendications précédente, **caractérisé en ce que** l'affaiblissement (3) de la seconde couche (2) et l'affaiblissement de la première couche (1) s'étendent avec des ondulations, ou en zigzag.

13. Couvercle d'airbag selon l'une des revendications 1 à 11, **caractérisé en ce que** l'affaiblissement de la seconde couche s'étend en ligne droite, et l'affaiblissement de la première couche s'étend avec des ondulations ou en zigzag.

14. Couvercle d'airbag selon l'une des revendications 1 à 11, **caractérisé en ce que** l'affaiblissement (3) de la seconde couche (2) s'étend avec des ondulations ou en zigzag, et l'affaiblissement de la première couche (1) s'étend en ligne droite.

15. Procédé de fabrication d'un couvercle d'airbag avec une première couche (1) de séparation avec l'espace
dans lequel se déploie l'airbag en cas de besoin, qui présente un affaiblissement le long de la région du tracé d'une ligne de rupture du couvercle d'airbag non visible de l'extérieur,
dans lequel la première couche (1) est pourvue de l'affaiblissement avant son application sur la seconde couche (2), et est reliée, pour la renforcer, sensiblement sur l'ensemble de la surface de son dos à une seconde couche (2) qui est tournée vers l'airbag replié,
et dans lequel la seconde couche (2) est également pourvue d'un affaiblissement (3), **caractérisé en ce que** l'affaiblissement de la première couche (1) est réalisé de telle façon que l'affaiblissement de la première couche (1) ne coïncide pas avec l'affaiblissement (3) de la seconde couche (2).

16. Procédé selon la revendication 15, **caractérisé en ce qu'**une troisième couche est associée à la seconde couche.

17. Procédé selon la revendication 16, **caractérisé en ce que** la troisième couche (4) est pourvue d'un affaiblissement auxiliaire (3) avant d'être appliquée sur la seconde couche, ou après avoir été appliquée sur la seconde couche (2).

18. Procédé selon l'une des revendications 15 à 17, **caractérisé en ce que** la première couche (1) est estampée pour former l'affaiblissement, et
la seconde couche (2) est estampée pour former l'affaiblissement (3).

19. Procédé selon l'une des revendications 15 à 18, **caractérisé en ce que** l'affaiblissement (3) de la seconde couche (2) est produit par un élément conducteur de l'électricité dans lequel, en cas de besoin, un courant électrique est conduit juste avant le déploiement de l'airbag, pour affaiblir la seconde couche.
